# EUROPÄISCHE PATENTSCHRIFT

(11) **EP 2 570 457 B1**
(45) Veröffentlichungstag und Bekanntmachung des Hinweises auf die Patenterteilung: **12.03.2014**
(21) Anmeldenummer: 12401165.1
(22) Anmeldetag: 07.08.2012
(51) Int. Cl.: C08L 33/02, F16B 13/14

(54) **Chemisches Befestigungssystem und dessen Verwendung**
Chemical fixing system and its use
Système de fixation chimique et son utilisation

(30) Priorität: 14.09.2011 DE 102011053598
(43) Veröffentlichungstag der Anmeldung: 20.03.2013
(73) Patentinhaber: fischerwerke GmbH & Co. KG, 72178 Waldachtal (DE)
(72) Erfinder: Grün, Jürgen, 79268 Bötzingen (DE); Schlenk, Christian, 79211 Denzlingen (DE); Schmidt, Clemens, 79211 Denzlingen (DE); Vogel, Martin, 79286 Glottertal (DE)

(56) Entgegenhaltungen:
- DE-A1- 3 617 702
- DE-A1- 3 912 765

## Beschreibung

Die Erfindung betrifft ein zwei- oder mehrkomponentiges chemisches Befestigungssystem zum Einmörteln von Verankerungsmitteln in Löcher oder Spalten gemäß dem Oberbegriff des Patentanspruchs 1 sowie die Verwendung eines derartigen Befestigungssystems nach Anspruch 10.

Es ist bekannt, ein Befestigungselement, beispielsweise eine Gewindestange, mittels eines chemischen Befestigungssystems in einem Bohrloch in Beton oder einem anderen Ankergrund zu befestigen. Hierbei wird in ein erstelltes Bohrloch die Befestigungsmasse eingebracht und gleichzeitig oder anschließend das Befestigungselement eingeführt, das nach dem Erhärten der Befestigungsmasse dauerhaft fixiert wird. Das chemisches Befestigungssystem kann aus den unterschiedlichsten polymerbildenden Komponenten bestehen, deren Härtung ebenfalls nach unterschiedlichen Reaktionsmechanismen erfolgen kann. Die Funktion dieser Systeme basiert zum einen auf der Benetzung und der Adhäsion zwischen Verankerungsgrund und Befestigungsmasse sowie Befestigungsmasse und Befestigungselement, zum anderen auf dem Formschluss zwischen der Befestigungsmasse und Vertiefungen und Hinterschneidungen im Verankerungsgrund sowie am Befestigungselement. Die chemischen Befestigungssysteme sollten daher vorteilhaft gute Adhäsion zum Verankerungsgrund und nach dem Aushärten eine hohe Kohäsion aufweisen. Beispiele für sehr gut geeignete Systeme sind die Produkte FEB RM, FIS V 360 S und FIS EM 390 S der fischerwerke GmbH & Co. KG, Waldachtal, Deutschland.

Die Beschaffenheit des Bohrlochs und der Bohrlochoberfläche hat entscheidenden Einfluss auf die Adhäsion und damit auf die Leistungsfähigkeit des chemischen Befestigungssystems. Im Bohrloch verbleibendes Bohrmehl kann als Trennmittel wirken und die Adhäsion beeinträchtigen. Daher muss das Bohrloch z.B. durch mehrfaches Ausblasen des beim Bohren entstandenen Bohrmehles sowie die Reinigung der Bohrlochwandung mit einer Bürste präpariert werden. Hier ist oft von Nachteil, dass es bei nassen oder sehr durchfeuchteten Verankerungsgründen trotz guter Reinigung des Bohrloches zu einer beträchtlichen Verringerung der Leistungsfähigkeit, vermutlich durch Nässe und schlecht entfernbare Restverschmutzungen, kommt. In Zulassungsverfahren z.B. nach ETAG äußert sich dies in hohen Teilsicherheitsbeiwerten und somit verringerten zulässigen Lasten.

Aufgabe der Erfindung ist es daher, ein chemisches Befestigungssystem bereitzustellen, dessen Leistungsfähigkeit durch Art und Umfang der Reinigung des Bohrlochs, insbesondere auch in durchfeuchteten Verankerungsgründen, wenig beeinträchtigt wird.

Diese Aufgabe wird erfindungsgemäß durch ein Befestigungssystem mit den Merkmalen des Anspruchs 1 sowie die Verwendung eines derartigen Systems mit den Merkmalen des Anspruchs 10 gelöst. Die erfindungsgemäßen zwei- oder mehrkomponentigen chemischen Befestigungssysteme enthalten in mindestens einer Komponente superabsorbierende Polymere (SAP). Ihr Anteil am gesamten Befestigungssystem kann hierbei 0,001-70 %, insbesondere 0,1-20 % oder besonders bevorzugt 0,5-10 % betragen. Die Prozentangaben beziehen sich hierbei und im folgenden auf Gewichtsprozent. Superabsorbierende Polymere sind gekennzeichnet durch ihre Fähigkeit, mindestens ihr Eigengewicht, teilweise jedoch über das 1000-fache des Eigengewichts an Wasser oder wässriger Lösung aufzunehmen, dabei entsprechend zu quellen und ein Hydrogel zu bilden. Dieses Verhalten von SAP ist im wesentlichen an zwei Bedingungen geknüpft und wird von diesen auch maßgeblich bestimmt. Zum einen müssen SAP über eine ausreichende Anzahl polarer Gruppen (insbesondere ionische Gruppen) verfügen, die die Hydrophilie bedingen. Eine zu geringe Anzahl polarer Gruppen würde eine nicht ausreichende Hydrophilie und damit eine zu geringe Wasseraufnahme bedeuten. Zum anderen müssen die Polymere schwach vernetzt sein, das heißt, die polymeren Ketten müssen durch kovalente Verbindungen miteinander verknüpft sein. Wären sie unvernetzt, würden sie sich in Wasser lösen. Wären sie hochvernetzt, könnte sich das Netzwerk durch dessen Engmaschigkeit nicht dehnen und somit nur sehr wenig Wasser aufnehmen. Daraus folgt, dass die Wasseraufnahme und Quellfähigkeit eines SAP steigt, wenn die Anzahl an polaren Gruppen in den Netzketten steigt und der Vernetzungsgrad sinkt bzw. umgekehrt mit steigender Vernetzungsdichte und abnehmender Anzahl an polaren Gruppen in den Netzketten die Wasseraufnahme und Quellfähigkeit eines SAP sinkt. Zur Charakterisierung der Eigenschaften eines SAP wird im Allgemeinen auf eine Angabe der Konzentration an polaren Gruppen sowie die Vernetzungsdichte verzichtet und stattdessen die aus den beiden Parametern folgenden Eigenschaften wie Wasseraufnahmevermögen bzw. Quellungsgrad angegeben.

Überraschenderweise wurde nun gefunden, dass die Leistungsfähigkeit von chemischen Befestigungssystemen durch den Zusatz von SAP besonders in feuchten Verankerungsgründen gesteigert werden kann. Dieser Effekt könnte auf die Wechselwirkung zwischen der Bohrlochoberfläche und den polaren bzw. ionischen Gruppen der SAP oder auf deren schrumpfausgleichende Wirkung durch Quellung beruhen.

Abgesehen von der Art und Konzentration der polaren Gruppen und der Vernetzungspunkte ist der sonstige chemische Aufbau der Netzketten für die Funktion als SAP von untergeordneter Bedeutung, sodass SAP aus unterschiedlichen natürlichen und synthetischen Polymeren wie z.B. Amylopektin, Gelatine, Polyvinylpyrrolidon oder Polyacrylsäure bestehen können. Besonders bevorzugt werden jedoch schwach vernetzte und teilneutralisierte Polyacrylsäurepolymere und Polyacrylsäurecopolymere eingesetzt, die aufgrund der leichten technischen Verfügbarkeit der Rohstoffe sowie der vielfältigen Möglichkeiten zur einfachen Einstellung des Vernetzungsgrades und der Konzentration an ionischen Gruppen über den Neutralisationsgrad hohe technische Bedeutung erlangt haben. Sie sind kommerziell z.B. von BASF SE, Ludwigshafen (Luquasorb) oder Evonik Stockhausen GmbH, Krefeld (Creasorb, Creabloc) erhältlich.

Zusätzlich hat es sich für die Erzielung guter Auszugswerte als günstig erwiesen, wenn neben den SAP in einer Komponente in einer weiteren Komponente Wasser eingesetzt wird. Das Verhältnis von SAP zu Wasser in der Mischung kann dabei von 100 zu 1 bis 1 zu 10000 betragen, z.B. 10 zu 1 bis 1 zu 500, insbesondere 2 zu 1 bis 1 zu 50. In der die SAP enthaltenden Komponente können zusätzlich auch noch hydraulisch härtende Füllstoffe wie Portlandzement enthalten sein, die mit dem Wasser aus der weiteren Komponente härtbar sind.

Das zwei- oder mehrkomponentige chemische Befestigungssystem ist bevorzugt so aufgebaut, dass eine erste Komponente ein härtbares Harzgemisch und räumlich davon getrennt eine zweite Komponente einen für das Harzgemisch korrespondierenden Härter umfasst.

Das härtbare Harzgemisch der ersten Komponente umfasst monomere, oligomere oder auch präpolymere Grundbausteine, die über reaktive Gruppen verfügen, über die sie zu einem Polymer, insbesondere zu einem hochvernetzten Duromer, verknüpft werden können. Der Anteil der härtbaren Bestandteile an der ersten Komponente kann 1 bis 100 %, insbesondere 10 bis 90 % und besonders bevorzugt 20 bis 70 % betragen. Neben den härtbaren Bestandteilen können weitere Inhaltsstoffe wie insbesondere Füllstoffe (wie sie beispielsweise in WO 02/079341 genannt werden), Stabilisatoren, Weichmacher, Beschleuniger, Inhibitoren, Rheologieadditive wie Thixotropiermittel, Pigmente und weitere Additive enthalten sein.

Die Verknüpfung der reaktiven Grundbausteine in der ersten Komponente startet erst bei oder nach der Durchmischung mit der den korrespondierenden Härter enthaltenden Komponente. Der korrespondierende Härter startet also die Verknüpfung der reaktiven Grundbausteine durch eine Polyreaktion. Hierbei kann der Härter die Polyreaktion lediglich anstoßen oder auslösen, oder aber der Härter kann selbst Teilnehmer an der gesamten Polyreaktion sein und zu einem integralen Bestandteil des entstehenden polymeren Netzwerkes werden. Der Anteil der die Härtung auslösenden Bestandteile an der zweiten Komponente liegt bei 0,01 bis 100 %, insbesondere bei 0,5 bis 90 % und besonders bevorzugt bei 0,9 bis 80 %. Auch in der zweiten Komponente können neben den die Härtung auslösenden Bestandteile weitere Inhaltsstoffe, wie für die erste Komponente genannt, enthalten sein.

In einer besonderen Ausführungsform der Erfindung ist das härtbare Harzgemisch dadurch gekennzeichnet, dass es als reaktive Gruppen Mehrfachbindungen enthält, die durch Reaktion untereinander durch radikalische Polymerisation gehärtet werden können. Besonders geeignete Bestandteile des härtbaren Harzgemisches sowie von Beschleunigern und Inhibitoren sind in EP 2 032 622 B1 Absätze [0012] bis [0017] und EP 0 534 197 B1 genannt. Besonders bevorzugt als härtbare Substanzen sind Vinylesterharze wie Urethan(meth)acrylate, Epoxy(meth)acrylate und (Meth)acrylate von alkoxylierten Bisphenolen und Butandioldi(meth)acrylat, Hydroxypropyl(meth)acrylat, Hydroxyethyl(meth)acrylat, Ethylenglykoldimethacrylat und Trimethylolpropantri(meth)acrylat sowie (wenn auch weniger bevorzugt) Styrol, Vinyltoluol, tert.-Butylstyrol, α-Methylstyrol und Divinylbenzol als Reaktivverdünner. Bevorzugte Beschleuniger sind N,N-Dialkylaniline und N,N-alkoxylierte Toluidine, als Inhibitoren sind (ggf. auch substituierte) Hydroxyaromaten wie Methoxyphenol, Brenzcatechine, Hydrochinone sowie Phenothiazine und sterisch gehinderte N-Oxide bevorzugt.

Bei dieser Ausführungsform der Erfindung finden in der zweiten Komponente radikalbildende Peroxide, wie organische Peroxide, wie Diacylperoxide, z.B. Dibenzoyl-oder Bis(4-chlorobenzoyl)peroxid, Ketonperoxide, wie Methylethylketonperoxid oder Cyclohexanonperoxid, oder Alkylperester, wie tert.-Butylperbenzoat, anorganische Peroxide, wie Persulfate oder Perborate, sowie Mischungen davon Verwendung.

Radikalisch härtbare chemische Befestigungssysteme haben den Vorteil, dass sie sehr schnell und auch bei tiefen Temperaturen zuverlässig aushärten und durch ihre hohe Vernetzungsdichte und hohe Glasübergangstemperatur eine sehr gute Chemikalien- und Temperaturbeständigkeit aufweisen. Die beschriebenen SAP sind, wohl durch den ähnlichen chemischen Aufbau, sehr gut kompatibel (z.B. in Bezug auf Lagerstabilität, geringe Entmischungstendenz, geringer Viskositätsanstieg) in diesen Systemen und eigenen sich daher besonders gut, die Leistungsfähigkeit in schlecht gereinigten oder nassen Bohrlöchern zu steigern.

In einer alternativen besonderen Ausführungsform der Erfindung ist das härtbare Harzgemisch dadurch gekennzeichnet, dass es als reaktive Gruppen Doppelbindungen oder Ringstrukturen enthält, die durch die Anlagerung von Molekülen mit funktionellen Gruppen aus der zweiten Komponente durch Polyaddition unter Verlust der Doppelbindung oder Ringöffnung gehärtet werden können.

Bei den Doppelbindungen als reaktive Gruppen enthaltenden härtbaren Harzgemische handelt es sich insbesondere um Di- oder Polyisocyanate, die durch korrespondierende Härter mit zerewitinoff-aktiven Wasserstoffatomen aus der zweiten Komponente durch Polyaddition gehärtet werden können. Eine ausführliche Aufzählung geeigneter Isocyanate und korrespondierender Härter (insbesondere Polyole, Polyamine und Polythiole) findet sich im "Kunststoff-Handbuch", 7. Polyurethane, Oertel, G., Carl Hanser Verlag, München 1993.

Bei den Ringstrukturen als reaktive Gruppen enthaltenden härtbaren Harzgemischen handelt es sich insbesondere um Di- oder Polyepoxide, die durch korrespondierende Härter mit zerewitinoff-aktiven Wasserstoffatomen aus der zweiten Komponente durch Polyaddition gehärtet werde können. Eine ausführliche Aufzählung geeigneter Epoxide und korrespondierender Härter (insbesondere Polyamine und Polythiole) findet sich im "Handbook of Epoxy Resins", Lee, H., Neville, K., McGraw-Hill Book Company, New York 1967. Besonders bevorzugte Epoxidverbindungen sind die Glycidylether von Bisphenol-A, Bisphenol-F, Novolaken, Alkandiolen (z.B. Butandiol- oder Hexandioldiglycidylether) und Alkantriolen (z.B. Trimethylolpropantriglycidylether) sowie Mischungen davon. Besonders bevorzugte Härter sind Mannichbasen, aliphatische und araliphatische Di- und Polyamine wie DETA, TETA, TEPA, Aminoethylpiperazin, 1,3-Bis-aminomethylcyclohexan, MXDA, Polyaminoamide sowie Polythiole.

Ein Vorteil der durch Polyaddition härtbaren Systeme kann die lange Offenzeit und die besonders gute Haftung sein, wenn auch die Glasübergangstemperatur und die Vernetzungsdichte nicht immer ausreichend hoch sind.

Die Größe der SAP-Partikel ist entscheidend für die Geschwindigkeit der Aufnahme von Wasser. Über die Teilchengröße können die Wasseraufnahme und die Quellung gezielt so gesteuert werden, dass sie bevorzugt vor oder während der Härtungsreaktion, weniger bevorzugt erst nach der Aushärtung, weitgehend abgeschlossen ist. Günstige Teilchengrößen liegen zwischen 1 und 3000 µm, insbesondere zwischen 2 und 1000 µm wie z.B. zwischen 10 und 600 µm.

Diese Teilchengrößen haben außerdem den Vorteil, dass sie eine ausreichend homogene Verteilung in der sie umgebenden Matrix ermöglichen und so starke lokale Konzentrationsunterschiede, insbesondere auch an Grenzflächen, vermieden werden. Die mögliche Interaktion mit Grenzflächen und eine Wasseraufnahme, sei es von einer Grenzfläche wie z.B. einer nassen Bohrlochoberfläche, oder aus einer weiteren Komponente, wird somit begünstigt. Je kleiner die SAP-Teilchen sind, umso schneller ist die Wasseraufnahme. Somit kann über die Teilchengröße die Kinetik der Quellung vorteilhaft an die Kinetik der Aushärtereaktion des härtbaren Harzgemisches angepasst werden.

Die Quellfähigkeit eines SAP ist die Fähigkeit, Wasser unter Quellung aufzunehmen. Die Quellfähigkeit hängt, wie oben beschrieben, von Vernetzungsgrad und Konzentration an hydrophilen Gruppen ab. Die Quellfähigkeit bei 23 °C kann gemessen werden, indem zu einer definierten Menge SAP m_{SAP} destilliertes Wasser im Überschuß zudosiert, nach erfolgter Quellung über 24 h überschüssiges, d.h. nicht durch das SAP gebundenes Wasser, abdekantiert und die Masse mq des gequollenen Hydrogels bestimmt wird. Die Quellfähigkeit errechnet sich dann aus dem Quotienten m_{q}/m_{SAP} [g/g].

Es hat sich als günstig erwiesen, wenn die Quellfähigkeit der eingesetzten SAP in demineralisiertem Wasser einen Wert von 10 g/g überschreitet, z.B. 20 g/g oder 50 g/g oder sogar 100 g/g. In Wasser gelöste Ionen setzen die Quellfähigkeit von SAP stark herab. Die Quellung in demineralisiertem Wasser stellt eine idealisierte Bedingung dar, die in der Realität kaum auftritt. Im Anwendungsfall muss immer mit der Anwesenheit von gelösten Ionen gerechnet werden. Diese können aus wasserlöslichen Bestandteilen im Bohrmehl oder aus verschiedenen weiteren Rohstoffen in den Befestigungsmassen (z.B. aus den Füllstoffen, ionischen Tensiden, teilentsalztem Wasser) herrühren. Daher wird als weiterer praxisrelevanter Parameter die Quellung in 0,9%iger Kochsalzlösung herangezogen. Die besten Ergebnisse werden erzielt, wenn die Quellfähigkeit der SAP in 0,9%iger Kochsalzlösung einen Wert von 1 g/g, insbesondere von 5 g/g oder von 10 g/g, überschreitet.

Mit den angegebenen Quellfähigkeiten wird, ohne die Wirkung der eingesetzten SAPs dadurch abschließend erklären zu wollen, eine ausreichende Quellwirkung und Volumenzunahme im Befestigungsmörtel bei Kontakt mit Wasser oder wässrigen Lösungen erzielt. Hierbei könnte durch Expansion des Befestigungsmörtels in kleine Risse und Hinterschnitte ein besserer und intensiverer Kontakt mit der Bohrlochoberfläche und ein verbesserter Formschluss und so eine erhöhte Leistungsfähigkeit erzielt werden.

Das zwei- oder mehrkomponentige chemische Befestigungssystem befindet sich in einer Zwei- oder Mehrkammervorrichtung, worin die miteinander reaktionsfähigen Komponenten jeweils räumlich getrennt so enthalten sind, dass sie während der Lagerung nicht miteinander reagieren können, die es jedoch ermöglicht, die Komponenten zur Befestigung an der gewünschten Stelle so zu vermischen und erforderlichenfalls einzubringen, dass dort die Härtungsreaktion stattfinden kann. Sehr geeignete Systeme sind Mehrkammerpatronen (z.B. aus Glas, Keramik oder Polymer) oder Kartuschen (z.B. aus Polymer oder Verbundfolien) mit Statikmischern. Neben den bevorzugten Patronen- und Kartuschensystemen können die zwei- oder mehrkomponentigen chemischen Befestigungssysteme auch in sonstigen mehrteiligen Kits und Gebinden wie Flaschen, Dosen, Eimern oder Beuteln vorliegen.

Bei Mehrkammerpatronen erfolgt die Durchmischung der Komponenten durch das Befestigungselement selbst. Es wird schlagdrehend in das mit der Patrone gefüllte Bohrloch eingetrieben, zerstört dabei die Mehrkammerpatrone, durchmischt die freigesetzten Komponenten intensiv durch die vibrierende Drehbewegung und startet so die Aushärtereaktion. Die hierbei auftretende Reibung reinigt gleichzeitig die Oberfläche der Bohrlochwand und trägt so auch zu einer hohen Leistungsfähigkeit des Systems bei.

Bei Kartuschensystemen werden die Komponenten durch eine Auspresspistole (manuell, elektrisch oder pneumatisch betrieben) über einen Statikmischer ausgepresst. Mit dem an der Statikmischerdüse austretenden homogen durchmischten Injektionsmörtel kann der Hohlraum, in dem befestigt werden soll, direkt und sauber verfüllt werden. Das Befestigungselement wird hier nachträglich in den mit Injektionsmörtel verfüllten Hohlraum (in der Regel ein Bohrloch) eingeführt. Auch dieses Verfahren ermöglicht ein einfaches und sauberes Arbeiten mit hoher Sicherheit, da immer das korrekte Mischungsverhältnis der Komponenten eingehalten wird.

Ein weiterer Gegenstand der Erfindung ist die Verwendung des beschriebenen Systems zur Befestigung von Befestigungselementen (z.B. Schrauben, Innengewindehülsen, Ankerstangen mit ein oder mehreren sich in Längsrichtung erweiternden Querschnitten, insbesondere aber Gewindestangen; alle gegebenenfalls auch mit Zusatzelementen wie z.B. Hülsen) in bauüblichen Substraten wie Beton, Natursteinen oder Kunststeinen. Durch die gute stoff- und formschlüssige Verbindung werden hohe Haltekräfte erreicht, insbesondere auch in feuchten Substraten, wo marktübliche Systeme bisher nur eine eingeschränkte oder ungenügende Leistungsfähigkeit aufweisen.

Die Erfindung wird an 3 Beispielen mit entsprechenden kommerziell verfügbaren Vergleichsbeispielen nachfolgend veranschaulicht. Die Proben werden nach den in der Leitlinie von der "European Organisation for Technical Approvals" (EOTA) (2001): ETAG N° 001 Ausgabe März 2001, Leitlinie für die europäische technische Zulassung für Metalldübel zur Verankerung im Beton, Teil 5: Verbunddübel, Brussels, 2001, unter 5.1.2.1 (b) beschriebenen Bedingungen einem Adhäsionsversagenstest unterzogen und der Mittelwert der Adhäsionsversagenslast aus 5 Proben für M12 Bolzen bei einer Verankerungstiefe von 95 mm ermittelt. Der Reinigungsvorgang bei Kartuschensystemen umfasst Ausblasen, Bürsten und nochmaliges Ausblasen, bei Patronensystemen wird 2 mal ausgeblasen.

### Beispiel 1: Vergleichsbeispiel für ein durch radikalische Polymerisation härtbares Befestigungssystem (ohne erfindungsgemäßen SAP-Zusatz):

Als Vergleichsbeispiel wird das kommerziell verfügbare zweikomponentige Injektionsmörtelsystem FIS V 360 S der fischerwerke GmbH & Co. KG, Waldachtal, Deutschland, verwendet. Es handelt sich um ein 5:1-Kartuschensystem, das über einen Statikmischer gemischt und ausgebracht wird. Das Befestigungssystem hat folgende Zusammensetzung:
Komponente (A): Vinylesterharz (ethoxyliertes Bisphenol-A-dimethacrylat), Hydroxypropylmethacrylat, weitere Methacrylsäureester, phenolische Inhibitoren,
aminische Beschleuniger, Thixotropiermittel, Portlandzement, Quarzssande, Additive (einschließlich Farbstoffe).
Komponente (B): Dibenzoylperoxid, Wasser, Verdickungsmittel, anorganische Füllstoffe (Quarzsand), Additive (einschließlich Farbstoffe).

### Beispiel 2: Durch radikalische Polymerisation härtbares Befestigungssystem mit erfindungsgemäßem SAP-Zusatz

Zur A-Komponente aus Beispiel 1 wird zusätzlich 5 % Luquasorb 1161 (BASF SE) zugegeben. Die B-Komponente wird beibehalten.

| | Adhäsionsversagenslast [kN] |
|---|---|
| Beispiel 1 (Vergleichsbeispiel) | 75 |
| Beispiel 2 (erfindungsgemäß) | 83 |

### Beispiel 3: Vergleichsbeispiel für ein durch radikalische Polymerisation härtbares Befestigungssystem (ohne erfindungsgemäßen SAP-Zusatz):

Als Vergleichsbeispiel wird das kommerziell verfügbare zweikomponentige Patronensystem Reaktionsanker R der fischerwerke GmbH & Co. KG, Waldachtal, Deutschland, verwendet. Es handelt sich um ein Patronensystem mit zugehöriger Ankerstange, die drehend und schlagend ins Bohrloch einvibriert wird. Die Reaktionsankerpatrone RM 12 hat folgende Zusammensetzung:
4,1 g Harz (umfassend ethoxyliertes Bisphenol-A-dimethacrylat, Hydroxypropylmethacrylat, weitere Methacrylsäureester, phenolische Inhibitoren, aminische Beschleuniger, Additive)
8,6 g Quarzsand
Innenrohr mit 0,31 g 50 %iges Dibenzoylperoxid in inertem Phlegmatisierungsmittel Glasanteil (wirkt in der Anwendung wie ein Füllstoff) ca. 6 g

### Beispiel 4: Durch radikalische Polymerisation härtbares Befestigungssystem mit erfindungsgemäßem SAP-Zusatz

Für Beispiel 4 werden Patronen analog Beispiel 3, jedoch mit 8 g Quarzsand und 0,6 g Luquasorb 1161 als Füllstoffe gefertigt.

| | Adhäsionsversagenslast [kN] |
|---|---|
| Beispiel 3 (Vergleichsbeispiel) | 52 |
| Beispiel 4 (erfindungsgemäß) | 62 |

### Beispiel 5: Durch Polyaddition härtbares Befestigungssystem (ohne erfindungsgemäßen SAP-Zusatz):

Als Vergleichsbeispiel für ein durch Polyaddition härtbares Befestigungssystem wird das kommerziell verfügbare zweikomponentige Injektionsmörtelsystem FIS EM 390 S der fischerwerke GmbH & Co. KG, Waldachtal, Deutschland, verwendet. Es handelt sich um ein 3:1-Kartuschensystem, das über einen Statikmischer gemischt und ausgebracht wird. Das Befestigungssystem hat folgende Zusammensetzung:
Komponente A: Bisphenol-A/F-Epichlorhydrinharz mit durchschnittlichem Molekulargewicht ≤ 700, Portlandzement, Trimethylolpropantriglycidylether, Phosphorsäureester.
Komponente B: Mannichbase, m-Phenylenbis(methylamin), 2,4,6-Tris(dimethylaminomethyl)phenol, 4,4'-Isopropylendiphenol, Benzylalkohol, Portlandzement.

### Beispiel 6: Durch Polyaddition härtbares Befestigungssystem mit erfindungsgemäßem SAP-Zusatz:

Zur A-Komponente aus Beispiel 3 wird zusätzlich 5 % Luquasorb 1161 (BASF SE) hinzugefügt. Die B-Komponente wird beibehalten.

| | Adhäsionsversagenslast [kN] |
|---|---|
| Beispiel 5 (Vergleich) | 80 |
| Beispiel 6 (erfindungsgemäß) | 87 |

Die erfindungsgemäßen Beispiele belegen im Vergleich mit den Vergleichsbeispielen die leistungserhöhende Wirkung der erfindungsgemäß zugesetzten SAP.

## Patentansprüche

1. Zwei- oder mehrkomponentiges chemisches Befestigungssystem zum Einmörteln von Befestigungsmitteln in Löcher oder Spalten, **dadurch gekennzeichnet, dass** in mindestens einer ersten Komponente superabsorbierende Polymere (SAP) beinhaltet sind.

2. Zwei- oder mehrkomponentiges chemisches Befestigungssystem nach Anspruch 1, **dadurch gekennzeichnet, dass** als superabsorbierende Polymere schwach vernetzte Polyacrylsäurepolymere oder Polyacrylsäurecopolymere eingesetzt werden.

3. Zwei- oder mehrkomponentiges chemisches Befestigungssystem nach einem der vorangehenden Ansprüche, **dadurch gekennzeichnet, dass** in einer zweiten Komponente Wasser beinhaltet ist.

4. Zwei- oder mehrkomponentiges chemisches Befestigungssystem nach einem der vorangehenden Ansprüche, **dadurch gekennzeichnet, dass** eine erste Komponente ein härtbares Harzgemisch und davon getrennt eine zweite Komponente einen für das Harzgemisch korrespondierenden Härter umfasst.

5. Zwei- oder mehrkomponentiges chemisches Befestigungssystem nach einem der vorangehenden Ansprüchen, **dadurch gekennzeichnet, dass** das chemische Befestigungssystem durch radikalische Polymerisation härtbar ist.

6. Zwei- oder mehrkomponentiges chemisches Befestigungssystem nach einem der Ansprüche 1 bis 5, **dadurch gekennzeichnet, dass** das chemische Befestigungssystem durch Polyaddition härtbar ist.

7. Zwei- oder mehrkomponentiges chemisches Befestigungssystem nach einem der vorangehenden Ansprüche, **dadurch gekennzeichnet, dass** die superabsorbierenden Polymere in Partikelgrößen von 1 µm bis 3000 µm eingesetzt werden.

8. Zwei- oder mehrkomponentiges chemisches Befestigungssystem nach einem der vorangehenden Ansprüche, **dadurch gekennzeichnet, dass** die superabsorbierenden Polymere eine Quellfähigkeit in demineralisiertem Wasser von > 10 g/g und in 0,9%iger NaCl-Lösung von > 1 g/g aufweisen.

9. Zwei- oder mehrkomponentiges chemisches Befestigungssystem nach einem der Ansprüche 1 bis 8, ausgeführt als Zwei- oder Mehrkomponentenssystem in Form einer Zwei- oder Mehrkammer-Kartusche oder einer Zwei- oder Mehrkammerpatrone.

10. Verwendung eines mehrkomponentigen chemischen Befestigungssystems nach einem der Ansprüche 1 bis 9 zur Befestigung von Befestigungselementen, insbesondere Ankerstangen in Substraten, insbesondere Beton, Natursteinen oder Kunststeinen.

## Claims

1. Two-component or multi-component chemical fixing system for embedding fixing means in mortar in holes or crevices, **characterised in that** superabsorbent polymers (SAP) are contained in at least a first component.

2. Two-component or multi-component chemical fixing system according to claim 1, **characterised in that** the superabsorbent polymers used are weakly crosslinked polyacrylic acid polymers or polyacrylic acid copolymers.

3. Two-component or multi-component chemical fixing system according to either one of the preceding claims, **characterised in that** water is contained in a second component.

4. Two-component or multi-component chemical fixing system according to any one of the preceding claims, **characterised in that** a first component comprises a hardenable resin mixture and, separately therefrom, a second component comprises a hardener complementary to the resin mixture.

5. Two-component or multi-component chemical fixing system according to any one of the preceding claims, **characterised in that** the chemical fixing system is hardenable by free-radical polymerisation.

6. Two-component or multi-component chemical fixing system according to any one of claims 1 to 5, **characterised in that** the chemical fixing system is hardenable by polyaddition.

7. Two-component or multi-component chemical fixing system according to any one of the preceding claims, **characterised in that** the superabsorbent polymers are used in particle sizes of from 1 µm to 3000 µm.

8. Two-component or multi-component chemical fixing system according to any one of the preceding claims, **characterised in that** the superabsorbent polymers have a swellability in demineralised water of > 10 g/g and in 0.9 % NaCl solution of > 1 g/g.

9. Two-component or multi-component chemical fixing system according to any one of claims 1 to 8, arranged as a two-component or multi-component system in the form of a two-chamber or multi-chamber cartridge or a two-chamber or multi-chamber capsule.

10. Use of a multi-component chemical fixing system according to any one of claims 1 to 9 for fixing fixing elements, especially anchor rods in substrates, especially concrete, natural stone or artificial stone.

## Revendications

1. Système de fixation chimique à deux ou plusieurs composants pour sceller des moyens de fixation dans des trous ou des fentes, **caractérisé en ce qu'**au moins un premier composant contient des polymères superabsorbants (SAP).

2. Système de fixation chimique à deux ou plusieurs composants selon la revendication 1, **caractérisé en ce que** des polymères d'acide polyacrylique ou des copolymères d'acide polyacrylique faiblement réticulés sont utilisés comme polymères superabsorbants.

3. Système de fixation chimique à deux ou plusieurs composants selon une des revendications précédentes, **caractérisé en ce qu'**un deuxième composant contient de l'eau.

4. Système de fixation chimique à deux ou plusieurs composants selon une des revendications précédentes, **caractérisé en ce qu'**un premier composant comprend un mélange de résines durcissables et qu'un deuxième composant, séparé du premier, comprend un durcisseur correspondant au mélange de résines.

5. Système de fixation chimique à deux ou plusieurs composants selon une des revendications précédentes, **caractérisé en ce que** le système de fixation chimique est durcissable par polymérisation radicalaire.

6. Système de fixation chimique à deux ou plusieurs composants selon une des revendications 1 à 5, **caractérisé en ce que** le système de fixation chimique est durcissable par polyaddition.

7. Système de fixation chimique à deux ou plusieurs composants selon une des revendications précédentes, **caractérisé en ce que** les polymères superabsorbants sont utilisés en tailles de particules de 1 µm à 3000 µm.

8. Système de fixation chimique à deux ou plusieurs composants selon une des revendications précédentes, **caractérisé en ce que** les polymères superabsorbants présentent une capacité de gonflement > 10 g/g dans l'eau déminéralisée et > 1 g/g dans une solution de NaCl à 0,9 %.

9. Système de fixation chimique à deux ou plusieurs composants selon une des revendications 1 à 8, réalisé comme un système à deux ou plusieurs composants sous la forme d'une cartouche à deux ou plusieurs chambres.

10. Utilisation d'un système de fixation chimique à plusieurs composants selon une des revendications 1 à 9 pour fixer des éléments de fixation, en particulier des tiges d'ancrage dans des substrats, en particulier du béton, des pierres naturelles ou des pierres artificielles.
